# EUROPEAN PATENT APPLICATION

(11) **EP 4 832 153 A1**
(43) Date of publication of application: **28.10.2026**
(21) Application number: 24907966.6
(22) Date of filing: 13.12.2024
(51) Int. Cl.: H01M 10/54, B02C 19/18, C22B 7/00

(54) **UNIT BATTERY SHREDDED MATERIAL, BATTERY SHREDDED MATERIAL INCLUDING SAME, AND BATTERY PROCESSING METHOD**

(30) Priority: 18.12.2023 KR 20230184553
(71) Applicant: POSCO Holdings Inc., Pohang-si, Gyeongsangbuk-do 37859 (KR); POSCO Co., Ltd, Gyeongsangbuk-do 37859 (KR)
(72) Inventor: LEE, Juseung, Pohang-si, Gyeongsangbuk-do 37859 (KR); PARK, Junyong, Pohang-si, Gyeongsangbuk-do 37859 (KR); PARK, Chonglyuck, Pohang-si, Gyeongsangbuk-do 37859 (KR); HAN, Sangwoo, Pohang-si, Gyeongsangbuk-do 37859 (KR); KIM, Wanyi, Pohang-si, Gyeongsangbuk-do 37859 (KR)
(74) Representative: Pfenning, Meinig & Partner mbB
(86) International application number: PCT/KR2024/020319
(87) International publication number: WO 2025/135682

(57) **Abstract**

The present invention relates to a unit battery shredded material, a battery shredded material including the same, and a battery treatment method, wherein the unit battery shredded material is a unit battery shredded material for recovering valuable metals from a waste battery, the unit battery shredded material has a layered structure including a separator on at least one surface of which a positive electrode or a negative electrode is stacked, and satisfies Conditions 1 to 3 in the present specification.

## Description

### [TECHNICAL FIELD]

The present invention relates to a waste battery, and more particularly, to a unit battery shredded material extracted from recycling of a waste battery, a battery shredded material including the same, and a battery treatment method.

### [BACKGROUND ART]

As demand for electric vehicles has become active worldwide, the issue of treatment of waste batteries generated from the electric vehicles has emerged as a social issue. In the case of lithium secondary batteries, which are main raw materials of the waste batteries, organic solvents, explosive materials, and heavy metal materials such as Ni, Co, Mn, and Fe are contained therein. However, since Ni, Co, Mn, and Li have high scarcity value as valuable metals, recovery and recycling processes after disposal of lithium secondary batteries are emerging as an important research field.

Specifically, a lithium secondary battery mainly includes copper and aluminum used as current collectors, Li-, Ni-, Co-, and Mn-containing oxides constituting a positive electrode material, and graphite used as a negative electrode material, and includes a separator separating the positive electrode material and the negative electrode material and an electrolyte solution injected into the separator. A solvent and a salt constituting the electrolyte solution are mainly used by mixing carbonate organic materials such as ethylene carbonate and propylene carbonate, and LiPF₆ is used as a representative salt.

In order to utilize the waste battery, development of a waste battery recycling process has been actively conducted, in which the waste battery is pulverized to generate an intermediate material such as waste battery shredded material or black powder, and then valuable metals are recovered through a post-process.

However, in the waste battery recycling process, the waste battery generally has a voltage in a range of 3.0 V to 3.2 V in a completely discharged state on a cell basis, although there are differences depending on the number of times of use or the state of the battery, and has a voltage close to 4 V in a fully charged state. Therefore, in a module or pack in which several tens to several hundreds of cells are connected, such residual voltage has considerably large energy, and thus safety related to battery explosion or electric shock becomes a problem when the waste battery is physically disassembled by applying external impact to the waste battery.

In order to prevent this, after disassembly, holes are formed in the battery and discharge is performed in salt water. The battery on which discharge has been completed undergoes a shredding step, and high-temperature heat treatment is performed to remove water and electrolyte solution.

At this time, the salt used for the salt-water discharge contains a large amount of materials such as Na, K, Cl, Mg, and Ca. Among the above-described materials, particularly Cl is removed to a certain extent during the high-temperature heat treatment process. However, a waste battery shredded material, or black powder, which is a powder in which a Ni-Co-Mn-Li-O oxide and C are mixed, the black powder being obtained by further processing the shredded material to remove Al, Cu, and a portion of a separator, contains impurities such as Na, K, and Mg, and thus there is a problem in that a recovery rate is reduced in an extraction process using acid leaching in a post-process during the battery recycling process.

In addition, research is needed on a post-treatment method for removing an electrolyte contained in the shredded material in order to safely transfer the waste battery to a post-process step after shredding.

### [DETAILED DESCRIPTION OF THE INVENTION]

### [Technical Problem]

A unit battery shredded material according to one embodiment of the present invention provides, through waste battery recycling, a unit battery shredded material having a low impurity content and preventing fire occurrence.

A battery shredded material according to one embodiment of the present invention has the above-described advantages and includes at least one or more unit battery shredded materials.

A battery treatment method according to another embodiment of the present invention provides a method for manufacturing a battery shredded material having the above-described advantages by removing volatile materials.

### [Technical Solution]

In one embodiment, a unit battery shredded material is a unit battery shredded material for recovering valuable metals from a waste battery, wherein the unit battery shredded material has a layered structure including a separator on at least one surface of which a positive electrode or a negative electrode is stacked, and may satisfy the following Condition 1, Condition 2, and Condition 3.

<Condition 1> The layered structure is a stacked structure having one or more layers and seven or fewer layers.

<Condition 2> A size of the unit battery shredded material based on a major axis, which is the longest axis among a width direction, a length direction, and a height direction, is 100 mm or less.

<Condition 3> When the unit battery shredded material is reheated at 150°C, a weight of the unit battery shredded material decreases by 1.0% or less.

In one embodiment, a surface of the unit battery shredded material may include a burned portion, which is a region in which at least a portion of the surface is burned, and a normal portion having no burn mark on the surface, and an area ratio of the burned portion to the normal portion may be 30% or less. In one embodiment, the burned portion may be formed at an edge portion of the surface.

A battery shredded material according to another embodiment of the present invention includes at least one unit battery shredded material, wherein the unit battery shredded material is a unit battery shredded material for recovering valuable metals from a waste battery, the unit battery shredded material has a layered structure including a separator on at least one surface of which a positive electrode or a negative electrode is stacked, and satisfies the following Condition 1, Condition 2, and Condition 3.

<Condition 1> The layered structure is a stacked structure having one or more layers and seven or fewer layers.

<Condition 2> A size of the unit battery shredded material based on a major axis, which is the longest axis among a width direction, a length direction, and a height direction, is 100 mm or less.

<Condition 3> When the unit battery shredded material is reheated at 150°C, a weight of the unit battery shredded material decreases by 1.0% or less.

In one embodiment, a content of the unit battery shredded material may be 90% or more in the total volume of the battery shredded material. In one embodiment, the battery shredded material may include, in wt%, impurities of Na: 0.4% or less, Ca: 0.03% or less, Mg: 0.02% or less, and K: 0.02% or less.

A battery treatment method according to still another embodiment of the present invention includes freezing a battery, shredding the frozen battery into a battery shredded material, and stabilizing the shredded battery material, wherein the battery shredded material includes at least one unit battery shredded material, the unit battery shredded material has a layered structure including a separator on at least one surface of which a positive electrode or a negative electrode is stacked, satisfies the following Condition 1 and Condition 2, and the stabilizing step may satisfy the following Condition 5.

### <Condition 1>

The layered structure is a stacked structure having one or more layers and seven or fewer layers.

### <Condition 2>

A size of the unit battery shredded material based on a major axis, which is the longest axis among a width direction, a length direction, and a height direction, is 100 mm or less.

### <Condition 5>

Low-temperature stabilization treatment is performed at 30°C or lower, and after the low-temperature stabilization treatment, high-temperature stabilization treatment is performed at 30°C or higher to 150°C.

In one embodiment, in the low-temperature stabilization treatment step, a weight of the battery shredded material may decrease by 2.8% to 4.6% relative to a weight of the battery shredded material before performing the low-temperature stabilization treatment step. In one embodiment, in the high-temperature stabilization treatment step, a weight of the battery shredded material may decrease by 8% to 10% relative to a weight of the battery shredded material before performing the low-temperature stabilization treatment step.

In one embodiment, the battery shredded material may satisfy the following Condition 4.

### <Condition 4>

A tap density of the battery shredded material is 200 kg/m³ to 600 kg/m³.

In one embodiment, a low-temperature stabilization time in the low-temperature stabilization treatment may be 6 hours to 12 hours. In one embodiment, a high-temperature stabilization time in the high-temperature stabilization treatment may be 5 hours to 12 hours.

In one embodiment, the stabilization treatment may be performed at a temperature applied to the shredded material of 0°C to 150°C. In one embodiment, the battery treatment method may include an intermediate stabilization treatment step before the high-temperature stabilization treatment step, wherein the intermediate stabilization treatment step may be performed at a temperature of 30°C to 120°C.

In one embodiment, the intermediate stabilization treatment step may be performed as multi-stage heat treatment, and the multi-stage heat treatment may be sequentially performed at a first temperature of 30°C to 60°C, a second temperature of 60°C to 90°C, and a third temperature of 90°C to 120°C. In one embodiment, the shredding step may include controlling a ratio of the unit battery shredded material to be 90% or more in the total volume of the battery shredded material.

In one embodiment, the freezing step may be performed by cooling to -150°C to -20°C. In one embodiment, the freezing step may be performed by cooling to -60°C to -20°C, and the shredding step may be performed under a vacuum atmosphere condition of 100 torr or less.

### [Advantageous Effects]

The unit battery shredded material according to one embodiment of the present invention includes low-temperature and high-temperature stabilization treatment steps at predetermined temperatures, thereby providing a unit battery shredded material having a low impurity content and preventing fire occurrence.

The battery shredded material according to another embodiment of the present invention provides a battery shredded material having at least one or more unit battery shredded materials having the above-described advantages.

The battery treatment method according to another embodiment of the present invention provides a method for manufacturing a battery shredded material having the above-described advantages by performing low-temperature and high-temperature stabilization treatment steps on a battery shredded material at predetermined temperatures to control a weight reduction amount of the battery shredded material.

### [BRIEF DESCRIPTION OF THE DRAWINGS]

FIG. 1 shows a change in voltage of a battery according to a cooling temperature according to one embodiment of the present invention.
FIG. 2 is a graph showing a relationship among a battery weight, an external cooling temperature, and a cooling time according to one embodiment of the present invention.
FIGS. 3A and 3B are photographs of Examples according to a minimum cooling time of the present invention, and FIGS. 3C and 3D are photographs of Comparative Examples according to the minimum cooling time of the present invention.
FIG. 4 is a graph of temperature of a shredded material over time according to one embodiment of the present invention.
FIG. 5A shows unit battery shredded materials according to one embodiment and a Comparative Example of the present invention, FIG. 5B shows a mixing ratio according to a weight ratio of battery shredded materials according to one embodiment of the present invention, and FIG. 5C shows a burned portion and a normal portion of a surface of a unit battery shredded material.
FIGS. 6A to 6C are photographs of a process of measuring a temperature of a waste battery and a temperature tendency of a shredded material according to SOC conditions.
FIG. 7 is a graph showing a temperature rise tendency of a shredded material according to SOC % conditions of a battery.
FIG. 8 is a graph showing a temperature of a battery shredded material over time in low-temperature stabilization, an intermediate stage, and a high-temperature stabilization stage according to one embodiment of the present invention.
FIG. 9A is a schematic view of a stabilization apparatus for performing a battery stabilization step, and FIG. 9B is a graph showing self-heating of a battery shredded material inside a transport box.
FIG. 10 shows a temperature change of a shredded material when heating temperatures for respective sections for heat treatment in a high-temperature stabilization step are controlled.
FIG. 11 shows a weight reduction ratio (%) of an electrolyte in a shredded material according to a heat treatment temperature of 150°C after high-temperature stabilization treatment of a battery shredded material.
FIG. 12 shows temperature and weight reduction amount according to tap density of a battery shredded material.

### [MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the context clearly indicates otherwise. As used in the specification, the term "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

Hereinafter, embodiments of the present invention will be described in detail. However, these are provided as examples, and the present invention is not limited thereto, and the present invention is only defined by the scope of the claims to be described below.

A unit battery shredded material according to one embodiment of the present invention is for recovering valuable metals from a waste battery and has a layered structure including a separator on at least one surface of which a positive electrode or a negative electrode is stacked. Specifically, the layered structure may include a configuration in which a positive electrode or a negative electrode is included on one surface or both surfaces of the separator based on the separator. More specifically, the number of layers of the layered structure may correspond to the number of separators.

The layered structure may include, for example, any one of positive electrode-separator-negative electrode, positive electrode-separator, separator-positive electrode, separator-negative electrode, and negative electrode-separator, and, for example, positive electrode-separator-negative electrode-separator-positive electrode-separator-negative electrode may have a three-layered structure. Specifically, as at least one or more layers are stacked, the unit battery shredded material may have a predetermined thickness in the thickness direction.

In one embodiment, the unit battery shredded material may satisfy the following Condition 1.

<Condition 1> The layered structure may be a stacked structure having one or more layers and seven or fewer layers.

The unit battery shredded material may be a layered structure having a stacked structure of one or more layers and seven or fewer layers. Specifically, the layered structure may be a stacked structure having one or more layers and five or fewer layers. As the layered structure is stacked within the above range, a temperature rise amount of the shredded material can be minimized, and a temperature-rising time can be appropriately required. When the layered structure is stacked thicker than the upper limit of the above range, there is a problem in that the temperature rise amount excessively increases and the temperature-rising time also increases, thereby causing combustion and fire.

In one embodiment, the unit battery shredded material may satisfy the following Condition 2.

<Condition 2> A size of the unit battery shredded material may be 100 mm or less based on a major axis, which is the longest axis among a width direction, a length direction, and a height direction.

In one embodiment, the unit battery shredded material may have a size of 100 mm or less based on the major axis. Specifically, the size of the unit battery shredded material may be 50 mm or less. When the size of the unit battery shredded material is excessively large, there is a problem in that the temperature of the battery shredded material itself rises to 100°C or higher, and thus a fire is highly likely to occur.

In one embodiment, the unit battery shredded material may satisfy the following Condition 3.

<Condition 3> When the unit battery shredded material is reheated to 150°C, a weight of the unit battery shredded material decreases by 1% or less.

Condition 3 may be an index as to whether the unit battery shredded material has been subjected to low-temperature and high-temperature stabilization steps. Specifically, when the unit battery shredded material is reheated at 150°C and then cooled, by comparing a weight of the battery shredded material before heating and a weight of the battery shredded material after heating, the weight of the battery shredded material after heating may decrease by 1% or less relative to the weight of the battery shredded material before heating.

When the weight of the unit battery shredded material satisfies the above-described range, the unit battery shredded material has been subjected to the low-temperature stabilization treatment and high-temperature stabilization treatment of the present invention, and a safe unit battery shredded material capable of reducing the possibility of fire occurrence in a post-process can be provided. When the weight of the unit battery shredded material is outside the above-described range, the electrolyte solution in the unit battery shredded material has not easily volatilized, and thus there is a problem in that fire occurs in a post-process.

In one embodiment, the surface of the unit battery shredded material may include a burned portion and a normal portion. The burned portion means a region in which at least a portion of the surface of the unit battery shredded material is burned, and the normal portion means a normal portion having no burn mark on the surface.

In one embodiment, on the surface of the unit battery shredded material, an area ratio of the burned portion to the normal portion may satisfy 30% or less. As the area ratio of the burned portion to the normal portion satisfies 30% or less, it is possible to prevent the possibility that the unit battery shredded material burns and causes a fire. When the area ratio of the burned portion to the normal portion exceeds 30%, the unit battery shredded material has a risk of burning and causing a fire accompanied by smoke.

In one embodiment, on the surface of the unit battery shredded material, the burned portion may be disposed at an edge of the surface. The normal portion may be disposed near a central portion of the surface of the unit battery shredded material. The burned portion means a region exhibiting a darker color than the normal portion.

A battery shredded material according to another embodiment of the present invention may include at least one or more of the above-described unit battery shredded materials. In one embodiment, in the battery shredded material, the content of at least one or more unit battery shredded materials may be 90% or more in the total volume of the battery shredded material. Specifically, the content of the unit battery shredded material may be 95% or more in the total volume of the battery shredded material.

Specifically, this may correspond to a case in which, in the battery shredded material, a ratio of unit battery shredded materials having a stacked structure of more than seven layers is 10% or less, specifically 5% or less, in the total volume of the battery shredded material, or a ratio of at least one or more unit battery shredded materials having a size greater than 100 mm based on the major axis is 10% or less, specifically 5% or less, in the total volume of the battery shredded material.

As described above, as the ratio of battery shredded materials having a layered structure of more than seven layers per unit volume in the total volume of the battery shredded material, or the ratio of unit battery shredded materials having a size greater than 100 mm based on the major axis, satisfies the above range, fire occurrence can be prevented.

In one embodiment, the battery shredded material is recovered from a waste battery and includes impurities, and the impurities may include Na, Ca, Mg, and K in wt%. The battery shredded material may be a shredded residue or black powder manufactured through a process of recovering and pulverizing the waste battery, which is a pretreatment process of a waste battery recycling process.

The battery shredded material may include impurities such as Na, Ca, Mg, and K. By lowering the content of the impurities, the battery shredded material can facilitate extraction of Li, which is a valuable metal in the same group, in a post-process.

A battery shredded material according to one embodiment of the present invention includes impurities, and the impurities may include, in wt%, Na: 0.4% or less (excluding 0%), Ca: 0.03% or less (excluding 0%), Mg: 0.02% or less, and K: 0.02% or less.

Hereinafter, reasons for limiting the content of the impurities will be described.

### Na: 0.4 wt% or less (excluding 0%)

Sodium (Na), as an element in the same group in a post-process for recovering valuable metals from the battery shredded material, has side effects in that sodium partially reacts instead of lithium in a lithium hydroxide formation process to form sodium hydroxide, thereby lowering lithium recovery or increasing costs in a causticization process. The battery shredded material may include sodium in an amount of 0.4 wt% or less, and specifically, sodium may be included in an amount of 0.1 wt% or less.

When sodium is contained in an amount greater than the above range, as Na increases, there is a problem in that actual yield decreases in a process required for producing lithium carbonate because Na is a Group 1 element like Li in a crystallization process of Li dissolved in a solvent after a leaching process and a solvent extraction process.

### Ca: 0.03 wt% or less (excluding 0%)

Calcium (Ca), like sodium, is an element that lowers the recovery rate of valuable metals in a post-process for recovering valuable metals from the battery shredded material. Calcium has better reactivity than aluminum when forming lithium aluminate and forms a lithium calcinate structure, thereby hindering formation of lithium aluminate, which is advantageous for a subsequent reaction, and ultimately lowering the recovery rate of lithium. The battery shredded material may include calcium in an amount of 0.03% or less, and specifically, calcium may be included in an amount of 0.02 wt% or less.

When calcium is contained in an amount greater than the above range, as Ca increases, there is a problem in that actual yield and process time increase in a solid-liquid separation process, which is an impurity purification process after the leaching process. In addition, when the content of calcium is excessively large, when nickel, cobalt, and manganese hydroxides and lithium hydroxide in a precursor state are synthesized to generate a positive electrode material, they are synthesized as Li[NiCoMn]₁₋ₓCaₓO₂, and calcium constitutes an oxide structure of the positive electrode material, thereby hindering movement of lithium ions and reducing capacity of the battery.

### Mg: 0.02 wt% or less

Magnesium (Mg) is an element that makes separation of a solid phase and a liquid phase difficult during leaching by acid in the valuable metal recovery process. The battery shredded material may include magnesium in an amount of 0.02 wt% or less, and specifically, 0.01 wt% or less.

When magnesium is contained in an amount greater than the above range, there is a problem in that a load is applied to a recovery process of nickel, cobalt, lithium, and the like. In addition, when the content of magnesium is excessively high, when nickel, cobalt, and manganese hydroxides and lithium hydroxide in a precursor state are synthesized to generate a positive electrode material, they are synthesized as Li[NiCoMn]₁₋ₓMgₓO₂, thereby forming an oxide structure of the positive electrode material, hindering movement of lithium ions, and reducing capacity of the battery.

### K: 0.02 wt% or less

Potassium (K) is also an element in the same group as lithium and serves to hinder behavior in which lithium is generated as a hydroxide compound. The battery shredded material may include potassium in an amount of 0.02 wt% or less, and specifically, 0.01 wt% or less. When potassium is contained in an amount greater than the above range, there is a problem in that a load is caused in a causticization process and the recovery rate of lithium is reduced.

A battery treatment method according to still another embodiment of the present invention includes freezing a battery, shredding the frozen battery, and stabilizing the shredded battery. The battery treatment method may be a method for treating various types of batteries including lithium ions, and the battery may be, for example, a lithium secondary battery separated from an automobile, a secondary battery separated from an electronic device such as a mobile phone, a camera, or a laptop computer, specifically a lithium secondary battery.

In one embodiment, the step of freezing the battery may satisfy the following Equation 1. <Equation 1> $Minimum cooling time \left(Hr\right) = A \times \left({W}^{0.33}\right)$

(A = 4 × e^{(-0.02×dT)}, W=battery weight (kg), dT=|external cooling temperature-target temperature|, and || means an absolute value.)

W in Equation 1 means a weight of the battery, and means, for example, a weight of a battery pack, a single battery, or a combination thereof. The minimum cooling time is an external cooling temperature, which is a cooling temperature applied to the battery, and means, for example, a target temperature for cooling an electrolyte solution in the battery.

By performing the step of freezing the battery for the minimum cooling time or longer, the electrolyte solution inside the battery is cooled, and thus subsequent processes can be stably performed. When the step of freezing the battery freezes the battery for a time shorter than the minimum cooling time, the electrolyte solution is not cooled, and thus there is a problem in that a risk of fire may occur during shredding.

The step of freezing the battery is performed at a temperature sufficient to freeze an electrolyte included in the battery. Specifically, the freezing step may be performed, for example, at a temperature range of -150°C to -20°C. More specifically, the temperature range may be - 150°C to -50°C, and still more specifically -80°C to -60°C.

When the battery is frozen in the above temperature range, a voltage minutely remaining inside the battery, for example, a voltage of about 2 V to 3 V, decreases close to 0 V. Accordingly, even when a short circuit occurs in which a positive electrode and a negative electrode directly contact each other, a battery reaction does not occur, and thus the battery temperature does not increase, and gas generation and combustion of the electrolyte do not occur. In addition, since the electrolyte is in a frozen state or in a state in which vaporization is suppressed, mobility of lithium ions is very low, and conduction characteristics due to the movement of the lithium ions can be remarkably reduced, and since vaporization of the electrolyte solution does not occur, flammable gases of ethylene, propylene, and hydrogen may not be generated.

When the freezing process is outside the above temperature range, for example, when cooling is performed at a temperature higher than -60°C, the voltage remaining inside the battery does not decrease to 0 V, and a battery reaction due to a short circuit may occur, and the electrolyte is not completely frozen, which is not appropriate. In addition, when cooling is performed to - 150°C, the electrolyte is sufficiently frozen and the voltage inside the battery also decreases to 0 V, and thus it is unnecessary to lower the temperature below this. As described above, the battery treatment method includes freezing the battery, such as a lithium secondary battery, before shredding the battery, thereby having an advantage of preventing a risk of fire that may occur in the battery shredding process.

The step of shredding the frozen battery may mean a process of applying impact or pressure to the battery so that a portion of the battery is separated from the battery. In one embodiment, the step of shredding the battery may mean all of a process of pulverizing the battery, a process of cutting the battery, a process of compressing the battery, and a combination thereof. Specifically, the shredding step may include all processes capable of destroying the battery to obtain shredded pieces having a small size.

In one embodiment, the step of shredding the battery may include all processes of compressing the frozen battery or destroying the battery by applying external force such as shear force or tensile force. The step of shredding the battery may be performed, for example, using a shredder.

In one embodiment, the step of shredding the battery may be performed at least once or more. Specifically, the shredding step may be performed continuously or discontinuously at least once or more.

In one embodiment, the step of shredding the battery may be performed under a condition of supplying an inert gas, carbon dioxide, nitrogen, water, or a combination thereof, or under a vacuum atmosphere condition of 100 torr or less. For example, when the process of freezing the battery is performed by cooling at a temperature range of -60°C to -20°C, if the shredding step is performed under the above-described conditions, oxygen supply can be suppressed, whereby an electrolyte can be prevented from reacting with oxygen, explosion caused thereby can be prevented, and vaporization of the electrolyte solution can be suppressed, so that flammable gases such as ethylene, propylene, or hydrogen may not be generated.

In one embodiment, at least one or more unit battery shredded materials included in the battery shredded material may satisfy the following Condition 1.

### <Condition 1>

The layered structure may have one or more layers and seven or fewer layers.

Condition 1 may mean that the layered structure of the unit battery shredded material including a separator on at least one surface of which a positive electrode or a negative electrode is stacked is controlled in the shredding step to be a stacked structure having one or more layers and seven or fewer layers.

In one embodiment, the layered structure may be a stacked structure having one or more layers and seven or fewer layers. Specifically, the layered structure may be a stacked structure having one or more layers and five or fewer layers. As the layered structure is stacked within the above range, a temperature rise amount of the shredded material can be minimized, and a temperature-rising time can be appropriately required. When the layered structure is stacked thicker than the upper limit of the above range, there is a problem in that the temperature rise amount excessively increases and the temperature-rising time also increases, thereby causing combustion.

In one embodiment, at least one or more unit battery shredded materials included in the battery shredded material may satisfy the following Condition 2.

### <Condition 2>

A size of the unit battery shredded material based on a major axis, which is the longest axis among a width direction, a length direction, and a height direction, may be 100 mm or less.

In one embodiment, the size of the unit battery shredded material, specifically, the size based on the major axis, which is the longest axis among the width direction, the length direction, and the height direction, may be controlled in the shredding step to be 100 mm or less, specifically 50 mm or less. When the maximum size of the battery shredded material is greater than 100 mm, a heat generation temperature occurring due to instability as the battery shredded material is shredded rises to a temperature region of 120°C, which is an average vaporization temperature of the electrolyte solution, thereby causing a problem in safety such as fire occurrence.

In one embodiment, at least one or more unit battery shredded materials included in the battery shredded material may satisfy the following Condition 4.

### <Condition 4>

A tap density of the shredded battery material is 200 kg/m³ to 600 kg/m³.

The tap density generally means an apparent density obtained by mechanically tapping a measuring container containing a powder sample. Specifically, in order to identify tap density characteristics of the lithium ion battery shredded material, a commercial battery module having a weight of 30 kg and composed of about 30 cells was shredded using a crusher, placed in a case manufactured for stabilization of the shredded material (volume: width 0.44 m×length 0.7 m×height 0.5 m), and mechanically tapped to measure an apparent density. More specifically, density (ρ=M/V) was calculated by dividing the battery weight (M, kg) by the case volume (V, m³). The tap density of the unit battery shredded material calculated by the above-described method is 200 kg/m³ to 600 kg/m³. Specifically, the tap density may be 200 kg/m³ to 300 kg/m³.

When the tap density is outside the upper limit, there is a risk of fire because heat is instantaneously generated by disconnection of shredded pieces that are densely stacked, and there is a problem in that stabilization treatment capacity is reduced because a space through which the electrolyte can escape to the outside becomes narrow. When the tap density is outside the lower limit, there is a problem in that a large number of gaps are formed between shredded pieces and occupy a large volume, and an additional pressing process is required to transfer the shredded pieces to a post-process.

In one embodiment, the step of shredding the battery may further include controlling a ratio of the unit battery shredded material to be 90% or more, specifically 95% or more, in the total volume of the battery shredded material. Specifically, this may correspond to controlling a ratio of unit battery shredded materials having a stacked structure of more than seven layers to be 10% or less in the total volume of the battery shredded material. Specifically, the ratio of unit battery shredded materials having a stacked structure of more than seven layers may be controlled to be 5% or less in the total volume of the battery shredded material. By satisfying the above range, there is an advantage in that fire occurrence can be prevented.

In one embodiment, the step of stabilizing the shredded battery material may satisfy the following Condition 5.

### <Condition 5>

Low-temperature stabilization treatment is performed at 30°C or lower, and high-temperature stabilization treatment is performed at 120°C to 150°C.

Specifically, the stabilizing step may include a low-temperature stabilization treatment step and a high-temperature stabilization treatment step performed at a temperature higher than that of the low-temperature stabilization treatment step. By simultaneously performing the low-temperature stabilization treatment step and the high-temperature stabilization treatment step, the stabilizing step volatilizes the electrolyte in the shredded battery material to reduce the weight of the battery shredded material and reduce the tap density.

The low-temperature stabilization treatment step may be a step of stabilizing the shredded battery material at a temperature of 30°C or lower. Specifically, the low-temperature stabilization treatment step may be a step in which the shredded battery material self-heats and is stabilized. More specifically, self-heating of the shredded material differs depending on a state of charge (SOC) condition indicating remaining capacity of the battery. More specifically, when the SOC is 30% or more, sudden heat generation may occur and fire may occur. Accordingly, the low-temperature stabilization treatment step may be a preliminary step of stabilizing the battery at a temperature of 10°C or lower to minimize the above-described fire risk.

In one embodiment, the low-temperature stabilization treatment step may be performed for 6 hours to 12 hours. When the low-temperature stabilization treatment step is outside the upper limit of the above-described time range, fire risk is minimized, but there is a problem in that productivity decreases due to an increased manufacturing lead time. When the low-temperature stabilization treatment step is outside the lower limit of the above-described time range, electrolytes may not be sufficiently safely removed, thereby causing a problem of fire occurrence in a post-process. In one embodiment, in the low-temperature stabilization treatment step, the weight of the battery shredded material may decrease by 2.8% to 4.6%. Specifically, the weight of the battery shredded material may decrease by 2.8% to 4.6% relative to the weight of the battery shredded material before performing the low-temperature stabilization treatment step. Through the low-temperature stabilization treatment, the weight of the battery shredded material decreases within the above-described range, whereby the low-temperature volatile electrolyte solution can be easily removed.

The high-temperature stabilization treatment step may be performed at 120°C to 150°C. Specifically, the high-temperature stabilization treatment step may be a step of applying high-temperature heat to the battery shredded material stabilized through the low-temperature stabilization treatment step to volatilize the electrolyte solution in the battery shredded material.

When the high-temperature stabilization treatment step is outside the upper limit of the above-described temperature range, there is a problem in that fire occurs. When the high-temperature stabilization treatment step is outside the lower limit of the above-described temperature range, there is a problem in that the electrolyte solution in the battery shredded material is not sufficiently volatilized.

In one embodiment, the high-temperature stabilization treatment step may be performed for 6 hours to 12 hours. When the high-temperature stabilization treatment step is outside the upper limit of the above-described time range, there is a problem in productivity due to an increased manufacturing lead time. When the high-temperature stabilization treatment step is outside the lower limit of the above-described time range, there is a problem in that the electrolyte is not sufficiently removed, which may cause a fire in a post-process.

In one embodiment, in the high-temperature stabilization treatment step, the weight of the battery shredded material may decrease by 8% to 10% relative to the weight of the battery shredded material before performing the low-temperature stabilization treatment step. Specifically, as the weight of the battery shredded material satisfies the above-described range, it can be confirmed that the high-temperature volatile electrolyte solution was easily volatilized.

For example, based on 100% of the weight of the battery, the electrolyte solution may account for 10% to 15%. After completion of the high-temperature stabilization treatment step, about 60% to 70% of the weight of the electrolyte solution is volatilized, which means that the weight is reduced by 9% to 10% based on 100% of the total weight of the battery.

In one embodiment, an intermediate stabilization treatment step may be included before the high-temperature stabilization treatment step, and a time of the intermediate stabilization treatment step is included in the high-temperature stabilization treatment time. The intermediate stabilization treatment step may be a step of volatilizing the electrolyte solution in the battery shredded material between the low-temperature stabilization treatment step and the high-temperature stabilization treatment step.

The intermediate stabilization treatment step may be performed at a temperature higher than that of the low-temperature stabilization treatment step and lower than that of the high-temperature stabilization treatment step. In one embodiment, the intermediate stabilization treatment step may be performed at 30°C to 120°C.

In one embodiment, the intermediate stabilization treatment step may be performed as multi-stage heat treatment. The intermediate stabilization treatment step may be sequentially performed at a first temperature of 30°C to 60°C, a second temperature of 60°C to 90°C, and a third temperature of 90°C to 120°C.

As described above, by performing the intermediate stabilization treatment step before the high-temperature stabilization treatment step, the temperature of the battery shredded material is gradually increased, and the electrolyte solution in the battery shredded material can be stably volatilized.

Hereinafter, preferred Examples and Comparative Examples of the present invention will be described. However, the following Examples are merely preferred embodiments of the present invention, and the present invention is not limited to the following Examples.

### <Experimental Example>

### <Internal Temperature of Battery According to Minimum Freezing Time>

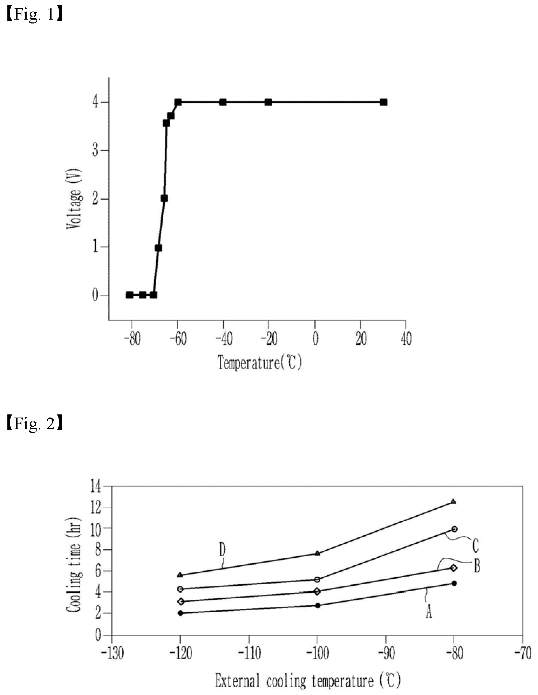

FIG. 1 shows a change in voltage of a battery according to a cooling temperature according to one embodiment of the present invention.

Referring to FIG. 1, when battery voltage is measured while freezing the battery to -80°C, the battery pack shows substantially the same voltage at a high temperature of about 40°C, room temperature, and to -60°C, and thus it can be confirmed that the battery does not lose battery characteristics. Subsequently, when the temperature decreases from -60°C to -70°C, the voltage rapidly decreases, and it was confirmed that the voltage becomes 0 V below -70°C. As described above, when the battery is frozen to -60°C to -150°C, it was confirmed that a short circuit does not occur.

FIG. 2 is a graph showing a relationship among a battery weight, an external cooling temperature, and a cooling time according to one embodiment of the present invention.

Referring to FIG. 2, in the battery treatment method according to one embodiment of the present invention, it can be confirmed that, in the step of freezing the battery, a minimum cooling time for cooling the battery can be derived. Specifically, it can be confirmed that the minimum cooling time is related to battery weight, external cooling temperature, and target temperature. Specifically, FIG. 2 shows the external cooling temperature and the minimum cooling time when the target temperature is set to -70°C and the battery weight is set to 2.5 kg (A), 10 kg (B), 20 kg (C), and 50 kg (D), respectively. When the battery is cooled, it can be confirmed that the electrolyte solution of the battery starts cooling after a predetermined time and becomes a state in which the voltage becomes 0 V. Through this, it can be confirmed that, in cooling the battery, a minimum holding time is required to sufficiently cool the inside, specifically up to the electrolyte solution.

Specifically, in a heat transfer situation for cooling in which heat is taken away to the outside, it can be confirmed that, in consideration of the specific heat of the battery itself, battery weight and time for cooling are required. As described above, in the present invention, a minimum time required for cooling can be confirmed using an external cooling temperature and a target temperature for freezing, and a battery weight, to cool the battery.

Table 1 below shows the minimum cooling time according to battery weight and external cooling temperature.

**[Table 1]**

| | Battery Weight [kg] | External Cooling Temperature [°C] | Target Temperature [°C] | Equation 1 | Minimum Cooling Time [h] |
|---|---|---|---|---|---|
| A_1 | 2.5 | -120 | -70 | 1.9 | 1.9 |
| A_2 | 2.5 | -100 | -70 | 2.9 | 2.9 |
| A_3 | 2.5 | -80 | -70 | 4.4 | 4.4 |
| B_1 | 10 | -120 | -70 | 3.1 | 3.1 |
| B_2 | 10 | -100 | -70 | 4.6 | 4.6 |
| B_3 | 10 | -80 | -70 | 7.0 | 7.0 |
| C_1 | 20 | -120 | -70 | 3.9 | 3.9 |
| C_2 | 20 | -100 | -70 | 5.8 | 5.8 |
| C_3 | 20 | -80 | -70 | 8.8 | 8.8 |
| D_1 | 50 | -120 | -70 | 5.3 | 5.3 |
| D_2 | 50 | -100 | -70 | 7.9 | 7.9 |
| D_3 | 50 | -80 | -70 | 11.9 | 11.9 |

Referring to Table 1, it can be confirmed that the smaller the battery weight, the shorter the minimum cooling time of the battery to be cooled. In addition, when cooling was performed for the value of Equation 1 derived from a relational expression according to battery weight, external cooling temperature, and target temperature as the minimum cooling time, it was confirmed that the battery, specifically, up to the electrolyte of the battery, was cooled. In addition, when the battery was cooled for a time equal to or longer than the value of Equation 1, fire did not occur in a post-process, that is, a battery pulverization process.

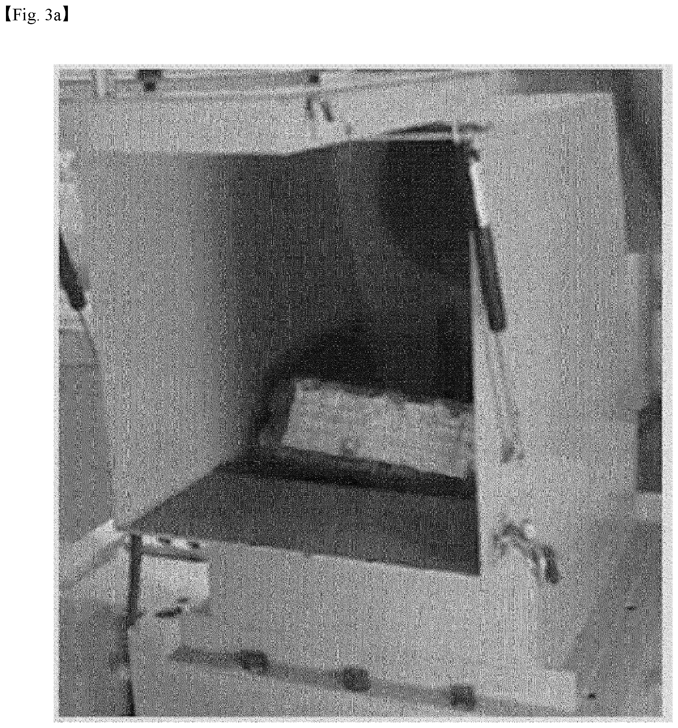

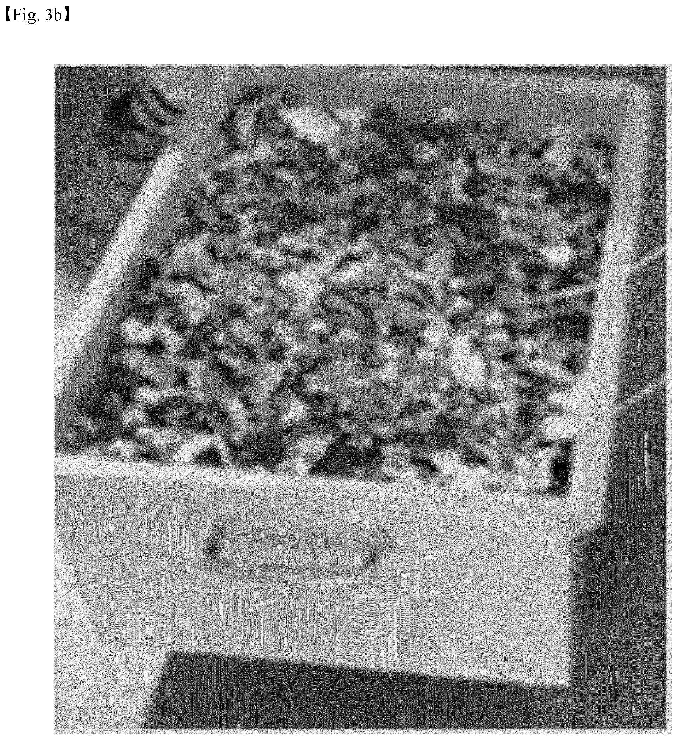

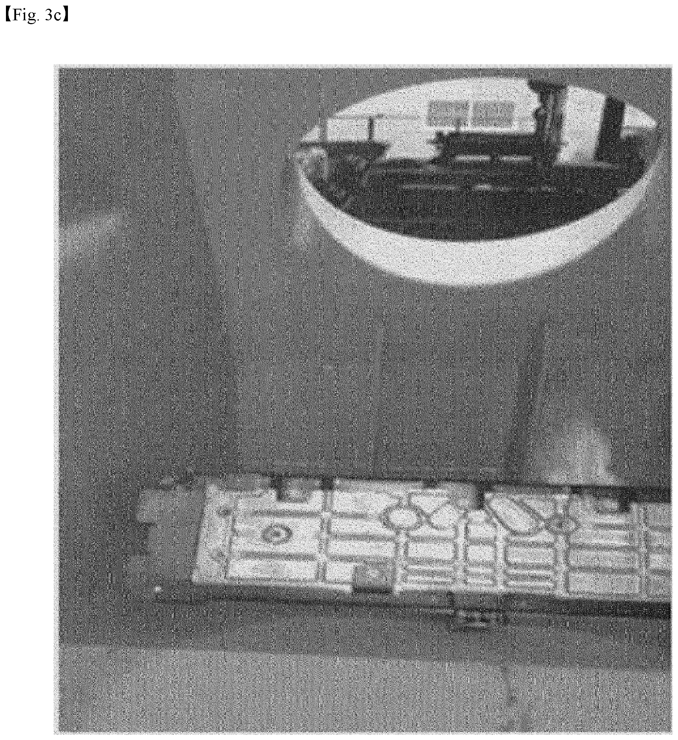

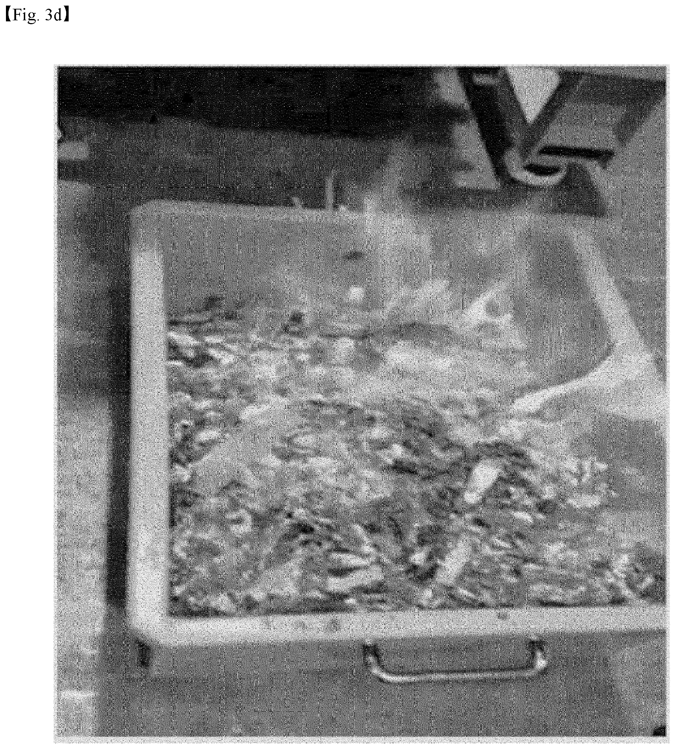

FIGS. 3A and 3B are photographs of Examples according to the minimum cooling time of the present invention, and FIGS. 3C and 3D are photographs of Comparative Examples according to the minimum cooling time of the present invention.

Referring to FIGS. 3A and 3B, an experiment was conducted on a fire occurrence state of a shredded material when the battery was frozen for a time shorter than a required minimum cooling time in cooling the battery. In the experiment, when the battery weight was 25 kg, the external cooling temperature was -95°C, the target freezing temperature was -70°C, and the value of Equation 1 below was 7 hours, the experiment was performed for 5 hours, which was lower than the value of Equation 1. <Equation 1> $Minimum cooling time = A \times \left({W}^{0.33}\right)$

(4×e^{(-0.02×dT)}, W=battery weight (kg), dT=|external cooling temperature-target temperature|, and || means an absolute value.)

Referring to FIGS. 3C and 3D, an experiment was conducted on a fire occurrence state of a shredded material when the battery was frozen for the minimum freezing time required for cooling or longer. In the experiment, the same battery weight, external cooling temperature, and minimum freezing time as in FIGS. 3A and 3B were used, except that the minimum freezing time was 7 hours or longer.

Table 2 below compares fire occurrence states of Examples and Comparative Examples according to the same battery weight, external cooling temperature, and minimum freezing time according to FIGS. 3A to 3D. For determination of the fire occurrence state, after battery shredding, a case in which fire occurrence was observed was indicated as "O," and a case in which fire occurrence was not observed was indicated as "X."

**[Table 2]**

| | Battery Weight [kg] | External Cooling Temperature [°C] | Target Temperature [°C] | Equation 1 | Actual Cooling Time [h] | Fire Occurrence |
|---|---|---|---|---|---|---|
| Comparative Example | 25 | - 95 | - 70 | 7.0 | 5 | O |
| Example | 25 | - 95 | - 70 | 7.0 | 7 | X |

Referring to Table 2, it can be confirmed that, when the battery is cooled to a value smaller than the value of Equation 1 corresponding to the minimum cooling time, the electrolyte is not cooled, and fire occurs after battery shredding. As described above, it can be confirmed that, when the battery is cooled using the value of Equation 1 as the minimum cooling time, the shredded material can be stably utilized without fire occurrence after battery shredding.

### <Battery Shredding Step - Size of Shredded Material>

Even when a frozen battery is shredded, the possibility of fire occurring during shredding is low, but a potential difference is generated in the shredded material depending on the state of charge of the battery inside the battery. In the present invention, a standard for stabilizing the shredded material was set by measuring how much the temperature of the shredded material rises.

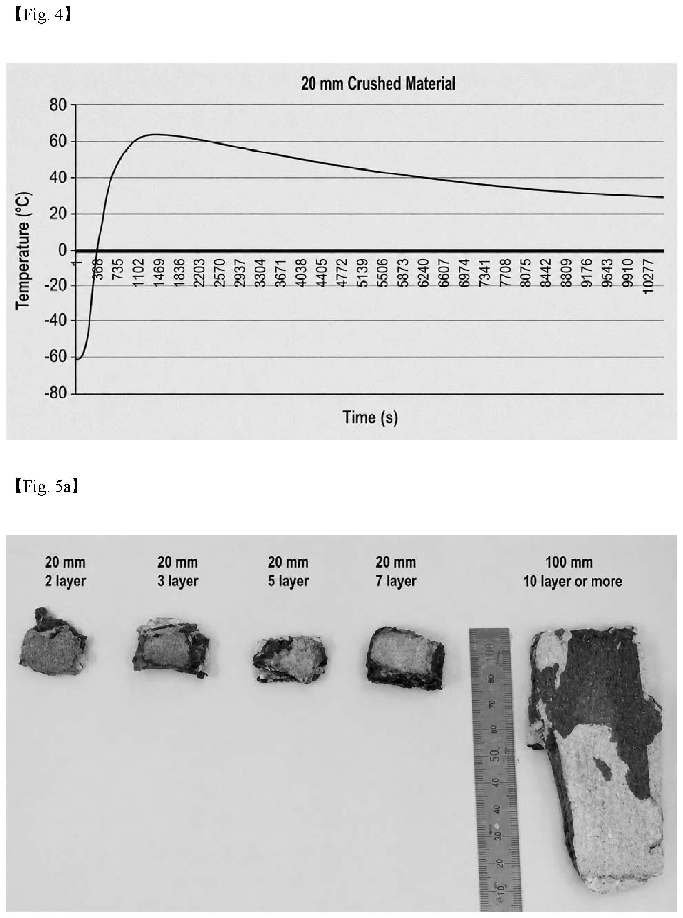

FIG. 4 is a graph of temperature of a shredded material over time according to one embodiment of the present invention.

FIG. 4 shows a temperature change over time in order to confirm a maximum heat generation temperature based on a shredded material having a size of 20 mm. Specifically, after the battery subjected to the freezing step was shredded, among the generated shredded materials, a shredded material having a size of 20 mm was placed in the atmosphere, and a temperature change over time was measured by an air-cooling method. In the case of the shredded material having a size of 20 mm, it can be confirmed that the maximum ignition temperature is about 65°C. It can be confirmed that this is lower than 120°C, which is an average vaporization temperature of the electrolyte solution.

Table 3 below shows temperature rise amounts measured according to shredded material size.

**[Table 3]**

| | Average Shredded Material Size (mm) | | | | | |
|---|---|---|---|---|---|---|
| | 1 | 10 | 20 | 50 | 100 | 150 |
| Temperature Rise Amount [°C] | 30 | 50 | 65 | 90 | 110 | 140 |

Referring to Table 3, it can be confirmed that a difference in re-heating temperature occurs depending on the size of the shredded material, and it was confirmed that, as a stabilization temperature for process design, the shredded material should be shredded such that an average size of the shredded material is within 100 mm in terms of the major axis, which is the longest axis among the width direction, the length direction, and the height direction.

In addition, depending on the shredded material size, a time required for the shredded material to be physically stabilized is required. As a method for stabilizing the shredded material, it is necessary to maintain the shredded material for a predetermined process time under a temperature condition lower than 120°C, or to maintain the shredded material for a predetermined process time in a state in which inert gas is introduced to reduce contact with oxygen in the atmosphere.

In the present invention, based on an average shredded material size of 20 mm, the shredded material was maintained at a room temperature level of 30°C for about 3 hours, and at this time, it was confirmed that the temperature of the shredded material, which had risen, decreased to a room temperature level.

The stabilization time does not cause a problem even when the holding time is within several minutes in the case of a shredded material of 100 mm or less, but in the case of a shredded material greater than 100 mm, a stabilization time of at least 3 hours or more is required.

### <Battery Shredding Step - Step of Controlling Shredded Material Layers of Battery Shredded Material>

When shredding was performed at less than the minimum freezing time of the shredded material, brittle fracture did not occur in the shredded material in an ultra-low temperature state, resulting in a problem in that the size of the shredded material became large or the thickness of the shredded material became thick because the positive electrode current collector and the negative electrode current collector existed in multiple layers. As the layer thickness of the shredded material becomes thick, there is a problem in that a temperature rise amount is large and a temperature-rising time takes a long time.

Table 4 below shows a temperature rise amount measured with a thermal imaging camera according to a layered structure in the unit battery shredded material according to one embodiment of the present invention.

Referring to Table 4 below, in the case of the layered structure, positive electrode-separator-negative electrode means one layer, and when the shredded material is stacked in multiple layers, the shredded material is arranged in the order of positive electrode-separator-negative electrode-separator-positive electrode-separator-negative electrode . . . . Specifically, this means that a separator structure between a positive electrode or the negative electrode in a waste battery is disposed in multiple layers as a one-layer structure. Specifically, a positive electrode or a negative electrode may be disposed on at least one surface of a separator based on the separator.

In Table 4 below, the average size of the shredded material was evaluated as 20 mm, and temperature evaluation according to the number of layers of the shredded material after shredding and recovery time required for the temperature to rise from a freezing temperature to a maximum temperature and then decrease again to 40°C were measured.

At this time, the size of the shredded material was measured based on the major axis among the major axis and the minor axis of the shredded material.

**[Table 4]**

| | Number of Layers of Layered Structure [layers] | Shredded Material Size [mm] | Maximum Temperature [°C] | Recovery Time to 40°C or Lower [min] | Remarks |
|---|---|---|---|---|---|
| Experimental Example | 2 | 20 | 63 | 110 | Example |
| Experimental Example | 3 | 20 | 64 | 110 | Example |
| Experimental Example | 5 | 20 | 75 | 144 | Example |
| Experimental Example | 7 | 20 | 105 | 200 | Example |
| Experimental Example | 10 | 100 | Combustion | - | Comparative Example |

FIGS. 5A to 5C show unit battery shredded materials according to one embodiment and a Comparative Example of the present invention.

Referring to FIG. 5A, Examples and Comparative Examples according to the shredded material size and the number of layers of the layered structure of the unit battery shredded material can be confirmed.

When FIG. 5A and Table 4 are examined together, it was confirmed that, when the number of layers of the layered structure was 3 layers or less, the temperature of the shredded material was stably maintained at 110°C or lower, and when the number of layers was greater than 7 layers, the temperature rose to a temperature higher than 105°C and then reacted with the electrolyte solution, thereby causing combustion.

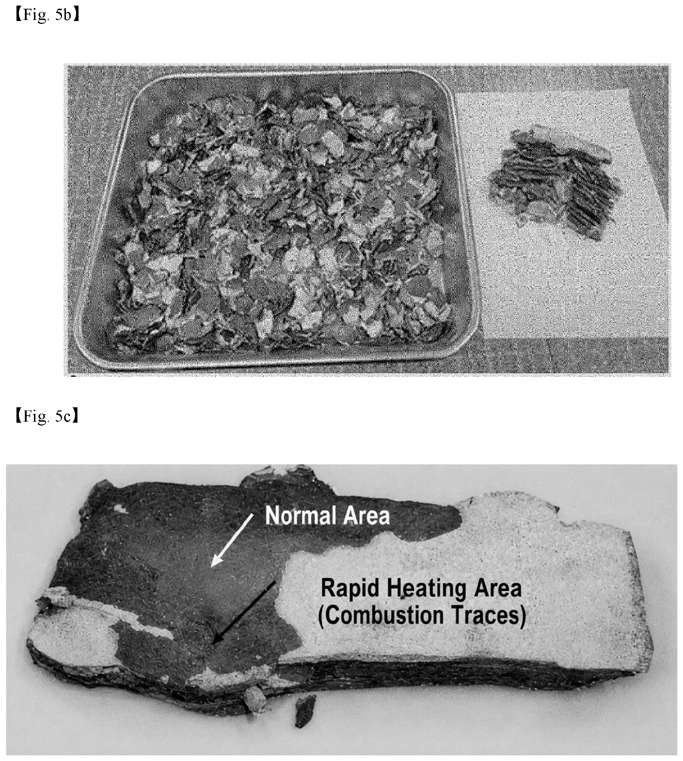

Referring to FIG. 5B, a mixing ratio according to a weight ratio of the battery shredded material can be confirmed. Specifically, 905 g of a battery shredded material having a layered structure of 7 layers or less (left side of FIG. 5B) and 95 g of a battery shredded material having a layered structure of more than 7 layers (right side of FIG. 5B) were mixed.

It was confirmed that, in the case of one layer, when the size of the battery shredded material exceeds a maximum of 100 mm, the maximum temperature rises to a temperature higher than 105°C, and thus a fire is likely to occur. In addition, it was confirmed that, even at 100 mm or less, when the number of layers of the layered structure is 10 or more, specifically greater than 7, the possibility of fire occurrence increases.

Table 5 below shows a possibility of fire occurrence according to a weight ratio of shredded materials having a layered structure of more than 7 layers in the battery shredded material of the present invention.

**[Table 5]**

| | Weight Ratio of More Than 7 Layers [%] | Number of Experiments [times] | Fire Occurrence Frequency [times] | Fire Occurrence | Remarks |
|---|---|---|---|---|---|
| Experimental Example | 2 < | 10 | 0 | X | - |
| Experimental Example | 2-5 | 10 | 0 | X | - |
| Experimental Example | 6-10 | 10 | 1 | Δ | Smoke occurred |
| Experimental Example | < 10 | 3 | 3 | O | Fire occurred |

Referring to Table 5, as a result of measuring the frequency of fire occurrence several times in a shredded material on a 1 kg cell basis, it was confirmed that, even when the shredded material in which the number of layers of the layered structure exceeded 7 layers was included at 10% or less based on the total weight ratio, fire occurrence rarely occurred. In addition, it was confirmed that, when the weight ratio of the shredded material in which the number of layers of the layered structure exceeded 7 layers was included in an amount greater than 10% based on the total weight ratio, fire occurred in all three experiments. At this time, it was confirmed that the ignition position of the fire started from a thick shredded material having 7 or more layers.

As described above, it was confirmed that, when the shredded material in which the number of layers of the layered structure exceeded 7 layers was included in an amount of 10% or less, specifically 5% or less, based on the total weight of the shredded material, fire of the shredded material could be prevented. It was also confirmed that the frequency of fire occurrence increased when, among all battery shredded materials, shredded materials having a layered structure of 7 layers or more or shredded materials having a size greater than 100 mm were included in an amount greater than 10%.

In addition, Table 6 below shows whether smoke occurred according to a ratio of burn marks on a surface of a shredded material according to one embodiment of the present invention.

**[Table 6]**

| | Burned Portion Area / Normal Portion Area Ratio [%] | Smoke Occurrence | Remarks |
|---|---|---|---|
| Experimental Example | 10 | X | Example |
| Experimental Example | 20 | X | Example |
| Experimental Example | 30 | X | Example |
| Experimental Example | More than 30 | O | Comparative Example |

FIG. 5C shows a burned portion and a normal portion of a surface of a unit battery shredded material according to one embodiment of the present invention.

Referring to FIG. 5C, a normal portion having no burn mark caused by high temperature and a surface of the shredded material having a burn mark caused by high temperature can be confirmed on the surface of the unit battery shredded material. The burned portion is a portion having a burn mark caused by high temperature, specifically, may be a rapidly heated portion, and means a region having a darker color than the normal portion, which is an unburned portion. The burned portion mostly appears as an edge that has been burned.

Referring to FIG. 5C and Table 6, it was confirmed that, when there was substantially no burn mark caused by high temperature on the surface of the unit battery shredded material or when the burn mark in the surface area was 30% or less, combustion did not occur when evaluating whether smoke occurred. When the burn mark in the surface area exceeded 30%, it was confirmed that a fire accompanied by smoke occurred.

### <Battery Stabilization Step: Temperature Tendency of Shredded Material According to SOC Conditions of Waste Battery>

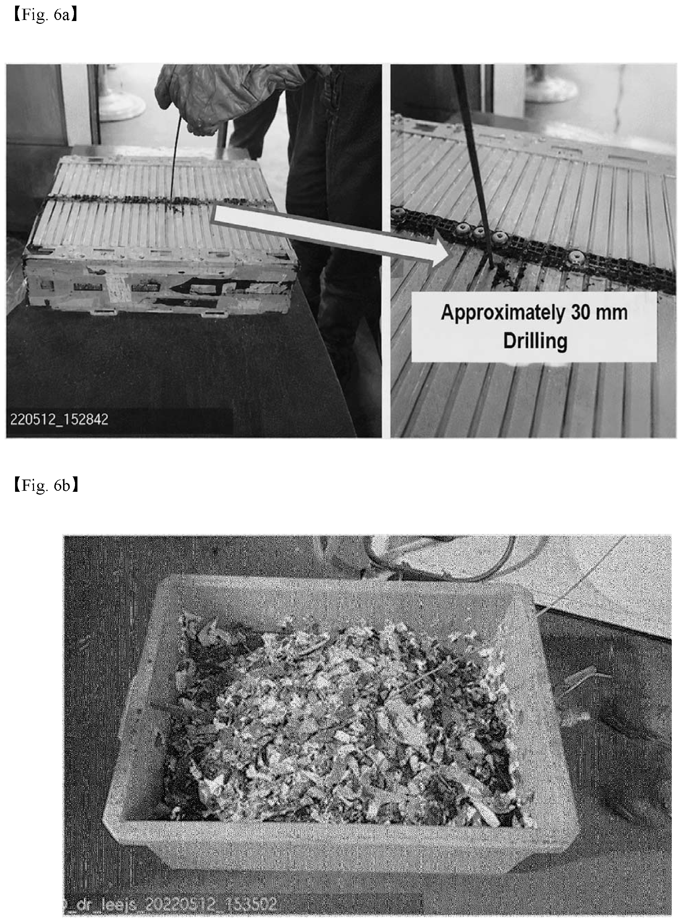

FIGS. 6A to 6C are photographs of a process of measuring a temperature of a waste battery and a temperature tendency of a shredded material according to SOC conditions.

FIGS. 6A and 6B show temperatures measured before and after shredding the battery, and FIG. 6C shows a temperature tendency of the shredded material according to SOC conditions of the waste battery. Referring to FIG. 6A, in order to measure a temperature before shredding the waste battery, a hole of about 30 mm was formed by drilling in the center of the battery module, and a TC (thermal couple) was installed to measure the temperature. Referring to FIG. 6B, in order to measure a temperature of the shredded material after shredding the waste battery, a TC (thermal couple) was installed in the center of the shredded material and measured.

Referring to FIG. 6C, temperature patterns measured under SoC conditions of 0% and 30% of the battery are shown. The SoC is an abbreviation of "State of Charge" and means a state of charge of a lithium ion battery. Specifically, in order to indicate the remaining capacity of the battery, a currently usable battery capacity is divided by the total capacity and expressed as a percentage (%). The graph is a graph obtained by installing a TC (thermal couple) in the center of the shredded material to measure the internal temperature of the shredded material after battery freezing and shredding.

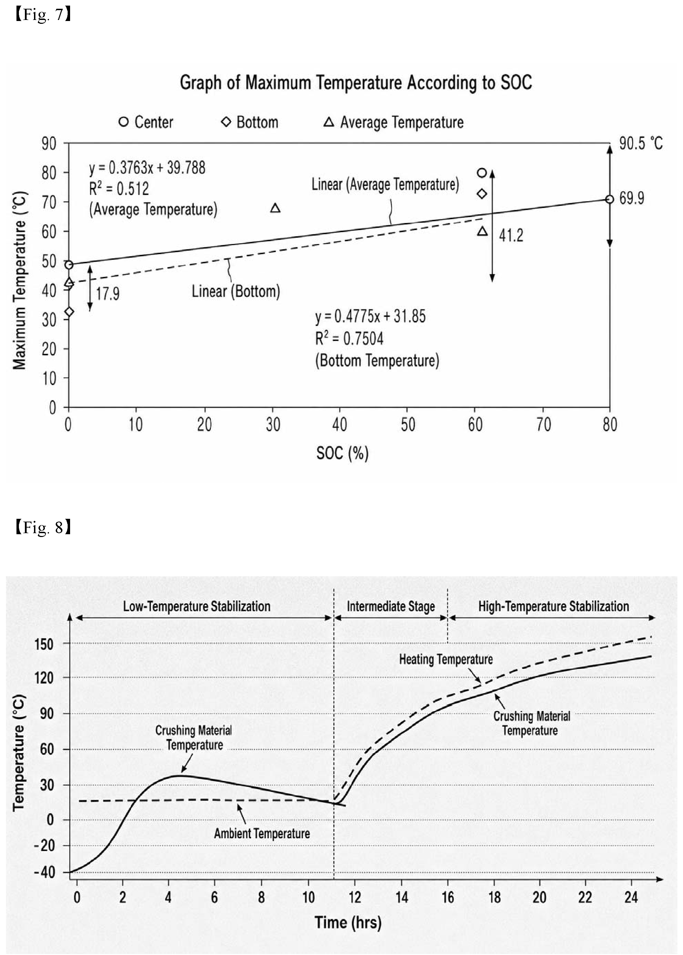

FIG. 7 is a graph showing a temperature rise tendency of a shredded material according to SOC % conditions of a battery.

Referring to FIG. 7, it was confirmed that a battery having an SoC of 0% was shredded in a frozen state and had an initial temperature starting at about -60°C and rising to a maximum temperature of about 30°C, and a battery having an SOC of 30% rose to 60°C. Through this, it is necessary to identify in advance the SOC state of the shredded material that undergoes low-temperature stabilization treatment by self-heating during stabilization treatment. Specifically, as for the maximum temperature tendency according to the SOC condition, it was confirmed that, in the case of 80% or more, fire occurred during stabilization treatment.

### <Battery Stabilization Step>

FIG. 8 is a graph showing a temperature of a battery shredded material over time in low-temperature stabilization, an intermediate stage, and a high-temperature stabilization stage according to one embodiment of the present invention.

FIG. 8 is a graph showing a temperature of the battery shredded material when stabilization treatment was continuously performed for a maximum of 24 hours by performing low-temperature stabilization for a maximum of 12 hours and the intermediate stage and high-temperature stabilization for a maximum of 12 hours. It was confirmed that the battery shredded material was subjected to a low-temperature stabilization process and then subjected to the intermediate stage and the high-temperature stabilization stage, thereby preventing the temperature of the battery from rapidly increasing and obtaining a stabilized battery.

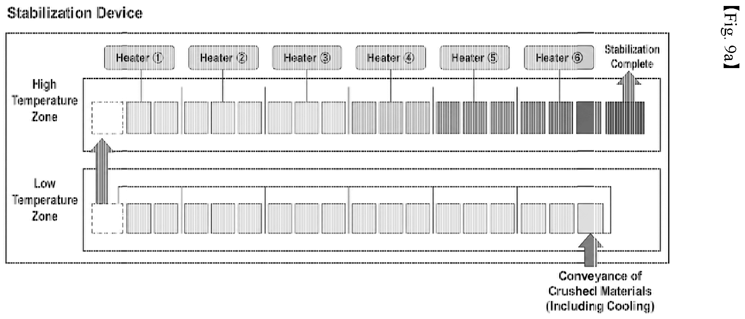

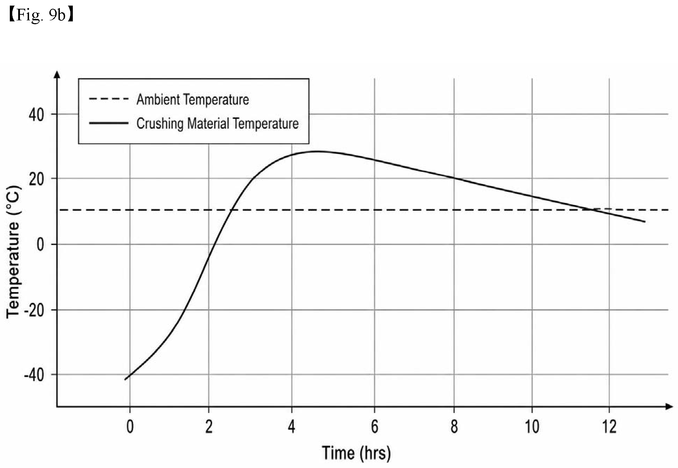

FIG. 9A is a schematic view of a stabilization apparatus for performing a battery stabilization step, and FIG. 9B is a graph showing self-heating of a battery shredded material inside a transport box.

Referring to FIG. 9A, first, after the freezing and shredding of the battery is completed, the shredded material is introduced into a stabilization apparatus. Thereafter, the low-temperature stabilization treatment is performed by slowly removing a low-temperature electrolyte while transferring the shredded material for up to 12 hours under a temperature condition of about 10°C to 20°C or lower.

FIG. 9B shows a temperature change of a transport box containing shredded materials under a condition of SOC 30% or less. Specifically, the ambient temperature of FIG. 9B means the temperature of the transport box. During the low-temperature stabilization step, it can be confirmed that, when the battery shredded material is transported, the temperature inside the transport box increases due to self-heating of the battery shredded material. At this time, it can be confirmed that, in the low-temperature stabilization step, it is preferable that the temperature of the battery shredded material be controlled to be 30°C or lower.

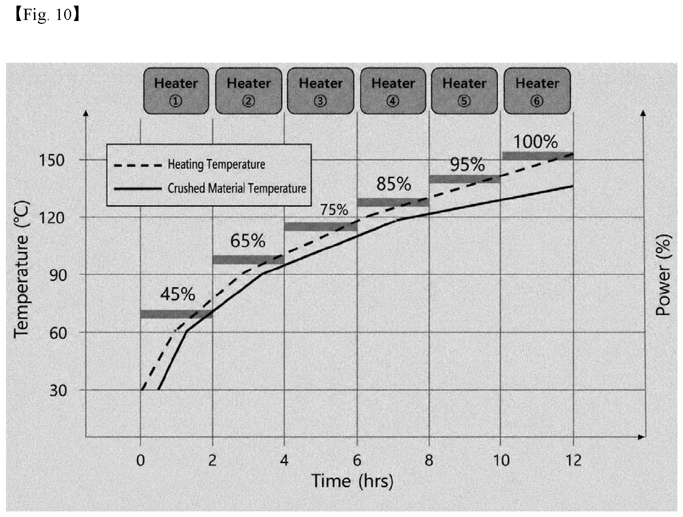

FIG. 10 shows a temperature change of a shredded material when heating temperatures for respective sections for heat treatment in a high-temperature stabilization step are controlled.

Referring to FIG. 10, the shredded material subjected to the low-temperature stabilization step is subjected to the high-temperature stabilization treatment step. In the high-temperature reduction treatment step, the temperature was controlled by adjusting power (%) of a heating device for each section (six sections) for continuous heat treatment, thereby increasing the temperature of the shredded material and, accordingly, removing the electrolyte in the shredded material.

### <Temperature Heating Pattern of Stabilized Shredded Material>

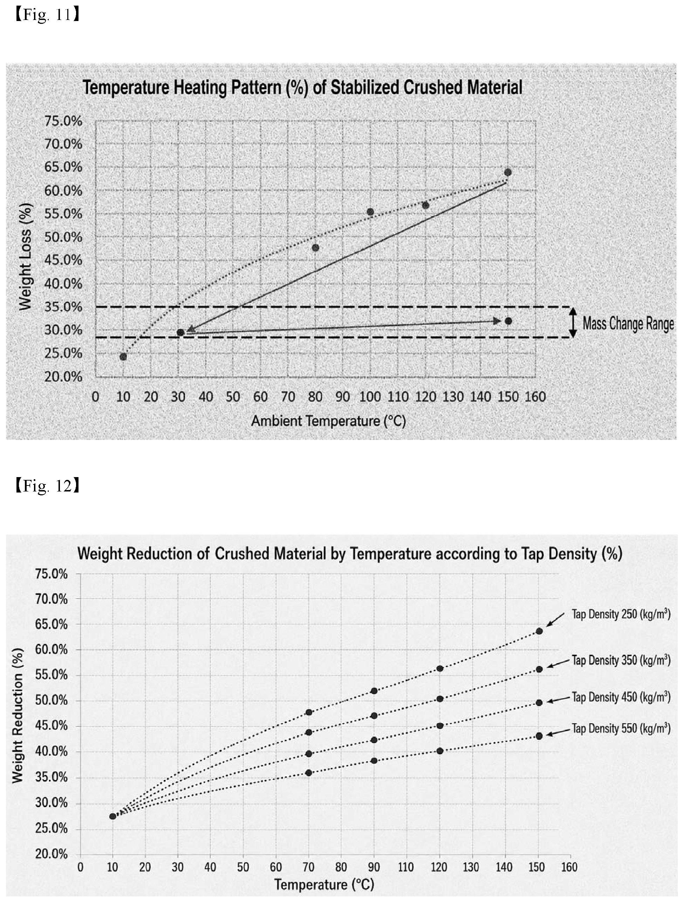

FIG. 11 shows a weight reduction ratio (%) of an electrolyte in a shredded material according to a heat treatment temperature of 150°C after high-temperature stabilization treatment of a battery shredded material.

Referring to FIG. 11, during high-temperature stabilization treatment of the battery, the heat treatment temperature of the shredded material was changed, and the weight reduction ratio (%) of the electrolyte contained in the entire shredded material according to temperature conditions was shown. Specifically, when the battery shredded material on which high-temperature stabilization treatment was performed was heated to 150°C, it was confirmed that, when the total amount of electrolyte contained in the battery shredded material was 100 wt%, the amount was reduced to about 65 wt% after the high-temperature stabilization treatment. The battery shredded material on which the high-temperature stabilization treatment was performed is a stabilized lithium ion shredded material capable of safely treating battery treatment operations in a post-process such as primary sorting or dry high-temperature treatment.

Accordingly, as a main feature of the shredded material stabilized after freezing and shredding, it was confirmed that, by additionally performing high-temperature stabilization treatment on the shredded material stabilized at low temperature, a mass change amount before and after heating was very low when the battery shredded material for which stabilization treatment was completed was heated at 150°C.

### <Change in Tap Density>

FIG. 12 shows temperature and weight reduction amount according to tap density of a battery shredded material.

Referring to FIG. 12, when tap densities of the shredded battery material before performing low-temperature stabilization were 250, 350, 450, and 550 kg/m³, respectively, a weight reduction amount when the battery shredded material underwent the battery stabilization step of the present invention is shown. It was confirmed that, when the tap density of the battery shredded material was sequentially lowered from 550 kg/m³ to 250 kg/m³, gaps were formed in the battery shredded material, volatilization of the electrolyte solution was easy, and the weight reduction amount relative to the weight (100%) of the electrolyte inside the battery increased.

### <Evaluation Example>: Data According to Low-Temperature Stabilization and High-Temperature Stabilization Conditions

Table 7 below shows a weight reduction amount and tap density of the shredded material when the battery shredded material, in which the unit battery shredded material having a layered structure has a stacked structure of 7 layers and the size of the unit battery shredded material is 20 mm based on the major axis, which is the longest axis among the width direction, the length direction, and the height direction, was subjected to low-temperature stabilization treatment and high-temperature stabilization treatment step conditions shown in Table 7 below.

At this time, a multi-stage intermediate stabilization treatment step was performed between the low-temperature stabilization treatment step and the high-temperature stabilization treatment step, and the intermediate stabilization treatment step was continuously heat-treated in temperature ranges of 30°C to 60°C, 60°C to 90°C, and 90°C to 120°C, respectively, and the above-described high-temperature heat treatment time was performed for 12 hours including all intermediate stabilization treatment times.

The weight reduction amounts of the shredded material after the low-temperature stabilization treatment step and the high-temperature stabilization treatment step were measured with a weight measuring instrument.

Tap density was measured by shredding a commercial battery module of about 30 kg (composed of 30 cells) with a crusher, placing the shredded material in a stabilization volume case (width 0.44 m×length 0.7 m×height 0.5 m), and mechanically tapping the same to obtain an apparent density. Specifically, density (ρ=M/V) is obtained by dividing the battery weight (M, kg) by the volume (V, m³) of the case.

The weight reduction ratio after reheating the shredded material was confirmed by reheating the unit battery shredded material subjected to the high-temperature stabilization treatment step to 150°C and then checking a weight reduction ratio before and after heating.

Stability was indicated as × when fire occurred during the battery shredding process and as ○ when no fire occurred.

**[Table 7]**

| | Tap Density [kg/m³] | Low-Temperature Stabilization Treatment Step Conditions | | Weight Reduction Amount of Shredded Material After Low-Temperature Stabilization Treatment Step [%] | High-Temperature Stabilization Treatment Step Conditions | | Weight Reduction Amount of Shredded Material After High-Temperature Stabilization Treatment Step [%] | Weight Reduction Ratio After Reheating Shredded Material [%] | Stability |
|---|---|---|---|---|---|---|---|---|---|
| | | Temperature [°C] | Time [h] | | Temperature [°C] | Time [h] | | | |
| Example | 250 | 10 | 6 | 3.7 | 150 | 12 | 9.5 | 0.7 | ○ |
| Example | 250 | 10 | 9 | 3.9 | 140 | 12 | 9.3 | 0.5 | ○ |
| Example | 250 | 20 | 12 | 4.1 | 130 | 6 | 8.5 | 0.9 | ○ |
| Example | 250 | 25 | 12 | 4.4 | 150 | 12 | 9.6 | 1.0 | ○ |
| Comparative Example | 250 | 0 | 24 | 2.5 | 100 | 5 | 6.4 | 3.1 | × |
| Comparative Example | 250 | 40 | 3 | 3.1 | 200 | 5 | 7.3 | 2.2 | × |

Referring to Table 7, the low-temperature stabilization treatment of the Examples was performed at 10°C to 25°C for 6 hours to 12 hours, and the high-temperature stabilization treatment was performed at 130°C to 150°C for 6 hours to 12 hours. At this time, when the weight reduction amount after reheating the shredded material was examined, it was confirmed that the weight reduction amount was 1.0% or less, and as the weight reduction amount after reheating the shredded material satisfied 1.0% or less, it was confirmed that the electrolyte reduction amount was large and stability in a post-process was secured. In contrast, when the low-temperature stabilization treatment process was not performed or was performed at a high temperature such as 40°C, there was a problem of fire risk of the battery, and it was confirmed that the weight reduction amount of the obtained battery shredded material was low. In addition, when high-temperature stabilization treatment was performed without sufficient low-temperature stabilization treatment, an excessive amount of low-temperature volatile electrolyte was generated during high-temperature treatment, thereby further increasing the risk of fire occurrence and causing a problem in that electrolyte reduction was not sufficiently achieved relative to a reference time.

Although preferred embodiments have been described in detail above, the scope of rights of the present invention is not limited thereto, and various modifications and improvements made by a person having ordinary skill in the art using the basic concept defined in the following claims also fall within the scope of rights of the present invention.

## Claims

1. A unit battery shredded material for recovering valuable metals from a waste battery,
wherein the unit battery shredded material has a layered structure including a separator on at least one surface of which a positive electrode or a negative electrode is stacked, and satisfies the following Condition 1, Condition 2, and Condition 3:
<Condition 1> the layered structure is a stacked structure having one or more layers and seven or fewer layers;
<Condition 2> a size of the unit battery shredded material based on a major axis, which is the longest axis among a width direction, a length direction, and a height direction, is 100 mm or less; and
<Condition 3> when the unit battery shredded material is reheated at 150°C, a weight of the unit battery shredded material decreases by 1.0% or less.

2. The unit battery shredded material of claim 1,
wherein a surface of the unit battery shredded material comprises:
a burned portion, which is a region in which at least a portion of the surface is burned; and
a normal portion having no burn mark on the surface, and
wherein an area ratio of the burned portion to the normal portion is 30% or less.

3. The unit battery shredded material of claim 2,
wherein the burned portion is formed at an edge portion of the surface.

4. A battery shredded material comprising at least one unit battery shredded material for recovering valuable metals from a waste battery,
wherein the unit battery shredded material has a layered structure including a separator on at least one surface of which a positive electrode or a negative electrode is stacked, and satisfies the following Condition 1, Condition 2, and Condition 3:
<Condition 1> the layered structure is a stacked structure having one or more layers and seven or fewer layers;
<Condition 2> a size of the unit battery shredded material based on a major axis, which is the longest axis among a width direction, a length direction, and a height direction, is 100 mm or less; and
<Condition 3> when the unit battery shredded material is reheated at 150°C, a weight of the unit battery shredded material decreases by 1.0% or less.

5. The battery shredded material of claim 4,
wherein a content of the unit battery shredded material is 90% or more in a total volume of the battery shredded material.

6. The battery shredded material of claim 4,
comprising, in wt%, impurities of Na: 0.4% or less, Ca: 0.03% or less, Mg: 0.02% or less, and K: 0.02% or less.

7. A battery treatment method, comprising:
freezing a battery;
shredding the frozen battery into a battery shredded material; and
stabilizing the shredded battery material,
wherein the battery shredded material comprises at least one unit battery shredded material,
wherein the unit battery shredded material has a layered structure including a separator on at least one surface of which a positive electrode or a negative electrode is stacked and satisfies the following Condition 1 and Condition 2, and
wherein the stabilizing satisfies the following Condition 5:
<Condition 1>
the layered structure is a stacked structure having one or more layers and seven or fewer layers;
<Condition 2>
a size of the unit battery shredded material based on a major axis, which is the longest axis among a width direction, a length direction, and a height direction, is 100 mm or less; and
<Condition 5>
low-temperature stabilization treatment is performed at 30°C or lower, and after the low-temperature stabilization treatment, high-temperature stabilization treatment is performed at 30°C or higher to 150°C.

8. The battery treatment method of claim 7,
wherein, in the low-temperature stabilization treatment step, a weight of the battery shredded material decreases by 2.8% to 4.6% relative to a weight of the battery shredded material before performing the low-temperature stabilization treatment step.

9. The battery treatment method of claim 7,
wherein, in the high-temperature stabilization treatment step, a weight of the battery shredded material decreases by 8% to 10% relative to a weight of the battery shredded material before performing the low-temperature stabilization treatment step.

10. The battery treatment method of claim 7,
wherein the battery shredded material satisfies the following Condition 4:
<Condition 4>
a tap density of the battery shredded material is 200 kg/m³ to 600 kg/m³.

11. The battery treatment method of claim 7,
wherein, in the low-temperature stabilization treatment, a low-temperature stabilization time is 6 hours to 12 hours.

12. The battery treatment method of claim 7,
wherein, in the high-temperature stabilization treatment, a high-temperature stabilization time is 5 hours to 12 hours.

13. The battery treatment method of claim 7,
wherein the battery treatment method is performed at a temperature applied to the shredded material for stabilization treatment of 0°C to 150°C.

14. The battery treatment method of claim 7,
further comprising an intermediate stabilization treatment step before the high-temperature stabilization treatment step,
wherein the intermediate stabilization treatment step is performed at a temperature of 30°C to 120°C.

15. The battery treatment method of claim 14,
wherein the intermediate stabilization treatment step is performed as multi-stage heat treatment, and
wherein the multi-stage heat treatment is sequentially performed at a first temperature of 30°C to 60°C, a second temperature of 60°C to 90°C, and a third temperature of 90°C to 120°C.

16. The battery treatment method of claim 7,
wherein the shredding comprises controlling a ratio of the unit battery shredded material to be 90% or more in a total volume of the battery shredded material.

17. The battery treatment method of claim 7,
wherein the freezing is performed by cooling to -150°C to -20°C.

18. The battery treatment method of claim 7,
wherein the freezing is performed by cooling to -60°C to -20°C, and
wherein the shredding is performed under a vacuum atmosphere condition of 100 torr or less.
